# EUROPÄISCHE PATENTSCHRIFT

(11) **EP 0 918 153 B1**
(45) Veröffentlichungstag und Bekanntmachung des Hinweises auf die Patenterteilung: **03.03.2004**
(21) Anmeldenummer: 97810903.1
(22) Anmeldetag: 24.11.1997
(51) Int. Cl.: F02C 9/26, G10K 11/178, F02B 51/06, F23R 3/28, F23N 5/24, F23N 5/16, F23N 1/00

(54) **Verfahren zum Minimieren thermoakustischer Schwingungen in Gasturbinenbrennkammern**
Method and apparatus for minimizing thermo-acoustic vibrations in gas turbine combustion chambers
Procédé et dispositif pour minimiser les vibrations thermoacoustiques dans les chambres de combustion de turbine à gaz

(43) Veröffentlichungstag der Anmeldung: 26.05.1999
(73) Patentinhaber: ALSTOM (Switzerland) Ltd, 5401 Baden (CH)
(72) Erfinder: Gutmark Ephraim Prof. Dr., Cincinnati, 4526 OH (US); Paschereit Christian Oliver Prof. Dr., 14109 Berlin (DE); Polifke Wolfgang Prof. Dr., 85354 Freising (DE); Weisenstein Wolfgang, 5453 Remetschwill (CH)

(56) Entgegenhaltungen:
- GB-A- 1 495 015
- US-A- 4 557 106
- US-A- 5 428 951

## Beschreibung

### Technisches Gebiet

Die Erfindung betrifft ein Verfahren zum Minimieren thermoakustischer Schwingungen in Gasturbinenbrennkammern, wobei eine modulierte Eindüsung von flüssigem oder gasförmigem Brennstoff an der Kopfstufe eines Vormischbrenners durchgeführt wird.

### Stand der Technik

Moderne Gasturbinenanlagen werden üblicherweise mit Vormischbrennern betrieben, da sich mit diesem Brennerkonzept eine gleichmässige Temperaturverteilung und damit einhergehend vergleichsweise niedrige Schadstoffemissionen verwirklichen lassen. Ein gattungsbildender Brenner ist in EP 321 809 beschrieben.

Dieser Brenner, der den Vorteil sehr niedriger Schadstoffemissionen mit einer kompakten sowie einfachen und damit zuverlässigen Konstruktion vereinigt, umfasst einen rotationssymmetrischen Hohlraum, in den über parallel zur Längsachse verlaufende Einlassschlitze tangential ein Verbrennungsluftstrom eingebracht wird. Aus der Wechselwirkung der tangentialen und der zur Brennermündung hin gerichteten axialen Bewegungskomponente resultiert eine Drallströmung durch diesen Hohlraum. Die Anreicherung der Verbrennungsluft mit Brennstoff erfolgt über Mittel am Gehäusemantel nahe den Einlassschlitzen und/oder über zentrale Zuführmittel im Bereich der Brennerachse. An einem Querschnittssprung der Brennermündung titt die Drallströmung in die Brennkammer aus und bricht unter Ausbildung einer stabilen Rückströmzone zusammen.
Nach einem bewährten Betriebskonzept fungieren die zentralen Brennstoffzuführmittel der Kopfstufe als Pilotstufe. Der eingedüste Brennstoff nährt eine Diffusionsflamme, die die Stabilität der Rückströmzone in transienten Lastbereichen oder im Teillastbereich zuverlässig unterstützt.
Es ist ein bekanntes Phänomen, daß in Brennkammern von Gasturbinen häufig unerwünschte thermoakustische Schwingungen auftreten. Mit dem Begriff "thermoakustische Schwingungen" werden sich gegenseitig aufschaukelnde thermische und akustische Störungen bezeichnet. Es können dabei hohe Schwingungsamplituden auftreten, die zu unerwünschten Effekten, wie etwa zu einer hohen mechanischen Belastung der Brennkammer, einer erhöhten NOₓ-Emissionen durch eine inhomogene Verbrennung und sogar zu einem Erlöschen der Flamme führen können. Dies trifft insbesondere für Verbrennungssysteme mit geringer akustischer Dämpfung zu.

Bei herkömmlichen Brennkammern hat die in die Brennkammer einströmende Kühlluft eine bedeutende Funktion, da der Kühlluftfilm an der Brennkammerwand schalldämpfend wirkt und damit zur Verminderung von thermoakustischen Schwingungen beiträgt. Um niedrige NOₓ-Emissionen zu erzielen, wird in modernen Gasturbinen ein zunehmender Anteil der Luft durch die Brenner selbst geleitet, der Kühlluftstrom also reduziert. Durch die damit einhergehende geringere Schalldämpfung treten die eingangs angesprochenen, mit den unerwünschten Schwingungen verbundenen Probleme in solchen modernen Brennkammern demnach verstärkt auf.
Eine Möglichkeit der Schalldämpfung besteht im Ankoppeln von Helmholtz-Dämpfern in der Brennkammerhaube oder im Bereich der Kühlluftzuführung. Bei engen Platzverhältnissen, wie sie für moderne, kompakt gebaute Brennkammern typisch ist, kann die Unterbringung solcher Dämpfer jedoch Schwierigkeiten bereiten. Diese Methode ist daher mit einem großen konstruktiven Aufwand verbunden.

Daneben ist bekannt, daß die im Brenner durch strömungsmechanische Instabilitäten entstehenden Wirbel zu einer periodischen Wärmefreisetzung der Flamme des Brenners und damit zu Druckschwankungen führen können.
Nach US 5428951 wird in einem Zuführkanal zur Brennkammer, insbesondere in der Verbrennungsluftzufuhr, ein spezieller Aktuator zur Erzeugung von Druckimpulsen angeordnet. Durch eine Folge kontrollierter Zündungen eines Brennstoff-/Luftgemischs innerhalb des Aktuators werden pulsartig expandierende Flammenkerne erzeugt, welche sich innerhalb der Verbrennunsluftströmung als eine Abfolge von Druckstössen bis in die Brennkammer fortpflanzen. In der Brennkammer erfolgt eine Anfachung von Strömungsinstabilitäten zu einer Phase, die für die Ausbildung von verbrennungsgetriebenen Instabilitäten ungünstig ist.
Eine weitere Möglichkeit zur Reduzierung der Schwingungsneigung eines Brenners liegt in der Stabilisierung der Flamme des Vormischbrenners. Dies kann, wie eingangs erwähnt, durch Eindüsung von zusätzlichem Brennstoff durch die Kopfstufe, eine auf der Brennerachse liegende Düse für Pilot-Brennstoff realisiert werden, was zu einer Anfettung der zentralen Flammstabilisierungszone führt. Diese Methode zur Verminderung der thermoakustischen Schwingungsamplituden ist allerdings mit dem Nachteil verbunden, daß die Eindüsung von Brennstoff an der Kopfstufe mit einer Erhöhung der Emission von NOₓ einhergeht.

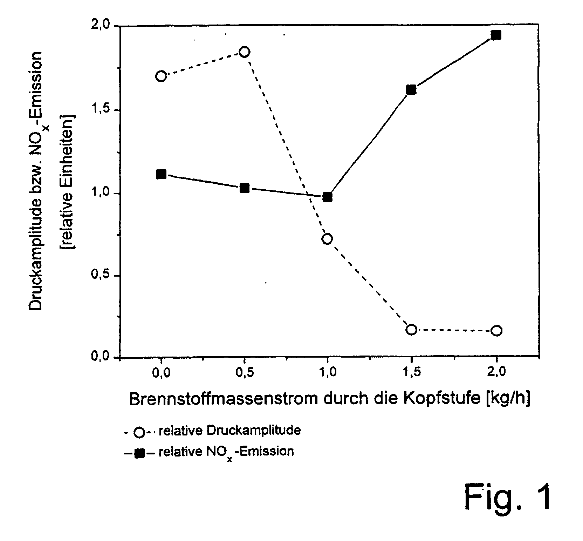

Zur Verdeutlichung des Zusammenhangs wurden in Figur 1 die relative Druckamplitude und die relative NOₓ-Emission gegen den Brennstoffmassenstrom durch die Kopfstufe aufgetragen. Wie aus Figur 1 deutlich zu ersehen ist, sinken bei einem zunehmenden Massenstrom des Pilotbrennstoffs zwar die Pulsationen, die NOₓ-Emissionen steigen aber stark an.

Durch Variation des Anteils des durch die Kopfstufe eingedüsten Brennstoffs am Gesamtbrennstoffmassenstrom kann ein optimaler Kopfstufenanteil für jeden denkbaren Gasturbinenbrenner gefunden werden. Bei diesem speziellen Brennstoffmassenstrom werden einerseits die Pulsationen ausreichend unterdrückt, andererseits sind die Emissionen noch nicht inakzeptabel angestiegen. Der optimale Kopfstufenanteil ist je nach verwendetem Brenner verschieden und muß jeweils experimentell ermittelt werden.

Unter Beibehaltung dieses für den verwendeten Gasturbinenbrenner optimalen Brennstoffmassenstroms durch die Kopfstufe des Brenners kann nun durch unterschiedliche Mengen an zugeführter Luft die λ-Zahl der Verbrennung variiert werden. Der λ-Wert ist ein Maß für das Verhältnis der in den Verbrennungsraum eingeführten zu der zur vollständigen Verbrennung theoretisch benötigten Luftmenge. Gasturbinenbrenner der in der vorliegenden Erfindung verwendeten Art werden in der Regel in einem Bereich von 1,8 ≤ λ ≤ 2,2 betrieben. Der zusätzliche Brennstoffmassenstrom durch die Kopfstufe erhöht den gesamten Brennstoffmassenstrom nur unwesentlich, so daß die λ-Zahl von dem zusätzlichen Massenstrom nicht beeinflußt wird.

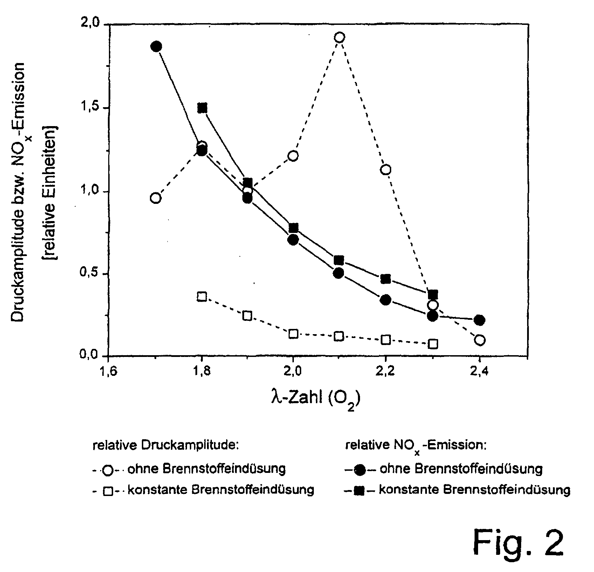

In Figur 2 wurde die relative Druckamplitude der thermoakustischen Schwingungen sowie die relative NOₓ-Emission gegen die λ-Zahl aufgetragen. Dabei werden zwei Fälle unterschieden, nämlich die Eindüsung einer konstanten Menge Brennstoff (hier 4,4% des Gesamtbrennstoffmassenstroms) in die Kopfstufe sowie der Fall ohne zusätzliche Brennstoffeindüsung. Die zusätzliche Eindüsung einer konstanten Menge an Brennstoff in die Kopfstufe des Brenners führt zu einer deutlich verminderten Druckamplitude der thermoakustischen Schwingungen. So beträgt die Druckamplitude bei λ = 2,1 nur 6% des Wertes ohne Brennstoffeindüsung.

Daneben ist aus Figur 2 aber auch zu ersehen, daß der Vorteil der verminderten Druckamplitude mit dem Nachteil einer erhöhten NOₓ-Emission erkauft wird. Durch die Eindüsung von zusätzlichem Brennstoff in die Kopfstufe des Brenners wird die NOₓ-Emission für alle untersuchten λ-Werte erhöht. Am deutlichsten wird dies für einen λ-Wert von 2,2, bei dem die NOₓ-Emission um 38% über dem Wert ohne zusätzliche Brennstoffeindüsung liegt.

### Darstellung der Erfindung

Hier setzt die Erfindung an. Es soll ein Verfahren zum Minimieren der Druckamplitude thermoakustischer Schwingungen in Gasturbinenbrennkammern geschaffen werden, wobei die Verringerung der Druckamplitude nahezu ohne Erhöhung der NOₓ-Emission erreicht wird.
Diese Aufgabe wird erfindungsgemäß durch ein Verfahren zur Minimierung der Druckamplitude thermoakustischer Schwingungen in einer mit mindestens einem Vormischbrenner betriebenen Brennkammer einer Gasturbine gemäss dem unabhängigen Anspruch gelöst.

Erfindungsgemäß erfolgt die Eindüsung von flüssigem oder gasförmigem Brennstoff in die Kopfstufe des mindestens einen Vormischbrenners moduliert, wobei eine vollständige Modulationsperiode aus der Eindüsung des Brennstoffs in Form eines zeitlich begrenzten Pulses und aus der nachfolgend fehlenden Zugabe von Brennstoff besteht und wobei die Bedingung 1% ≤ tzugabe / (t_{zugabe} + t₀) ≤ 50% erfüllt ist, wobei t_{zugabe} die Zeit definiert, in der eine Brennstoffeindüsung erfolgt, und t₀ jene Zeit definiert, in der keine Brennstoffeindüsung erfolgt.
Demnach ergibt sich die Periodendauer der Modulation der Brennstoffeindüsung zu τ = t_{Zugabe} + t₀ und die Frequenz zu ν = 1/τ = 1/(t_{Zugabe} + t₀).
Die Modulation kann erfindungsgemäß mit einer beliebigen Frequenz erfolgen. Bevorzugt erfolgt die Eindüsung mit einer Frequenz zwischen 0,3 Hz und 5 kHz, wobei der Bereich von 5 Hz bis 20 Hz besonders bevorzugt wird. Die Eindüsung erfolgt hierbei phasenunabhängig von den Druckschwingungen in dem Verbrennungssystem.

Die Menge des pro Zeiteinheit eingedüsten Brennstoffs kann dabei im Rahmen der vorliegenden Erfindung in beliebiger Weise variiert werden.

Für das Verhältnis von t_{Zugabe} zu τ, ausgedrückt in Prozent, ist auch der Begriff "duty cycle" üblich. Bei einem duty cycle von 50% ist somit der Zeitraum der zusätzlichen Brennstoffeindüsung gleich dem Zeitraum, in dem kein zusätzlicher Brennstoff eingedüst wird. Die Zugabe einer konstanten Menge an Brennstoff entspricht einem duty cycle von 100%.

### Kurze Beschreibung der Zeichnungen

Die Erfindung soll nachfolgend anhand eines Ausführungsbeispiels im Zusammenhang mit den Zeichnungen näher erläutert werden. Es zeigen
- Fig. 1: eine Auftragung der relativen Druckamplitude und der relative NOₓ-Emission gegen den Brennstoffmassenstrom durch die Kopfstufe;
- Fig. 2: eine Auftragung der relativen Druckamplitude und der relativen NOₓ-Emission gegen die λ-Zahl für einen Brenner ohne zusätzliche Brennstoffeindüsung in die Kopfstufe bzw. für einen Brenner mit Eindüsung einer konstanten Menge Brennstoff in die Kopfstufe;
- Fig. 3: eine Auftragung der relativen Druckamplitude gegen die λ-Zahl für einen Brenner ohne zusätzliche Brennstoffeindüsung in die Kopfstufe, mit Eindüsung einer konstanten Menge Brennstoff bzw. mit einer modulierten Eindüsung von Brennstoff in die Kopfstufe;
- Fig. 4: eine Auftragung der NOₓ-Emission gegen die λ-Zahl für einen Brenner ohne zusätzliche Brennstoffeindüsung in die Kopfstufe bzw. für einen Brenner mit modulierter Eindüsung von Brennstoff in die Kopfstufe;
- Fig. 5: eine Auftragung der NOₓ-Emission gegen die λ-Zahl für einen Brenner mit Eindüsung einer konstanten Menge Brennstoff in die Kopfstufe bzw. für einen Brenner mit modulierter Eindüsung von Brennstoff in die Kopfstufe, wobei die NOₓ-Emission auf die Emission ohne zusätzliche Brennstoffeindüsung (100%) bezogen ist.

### Weg zur Ausführung der Erfindung

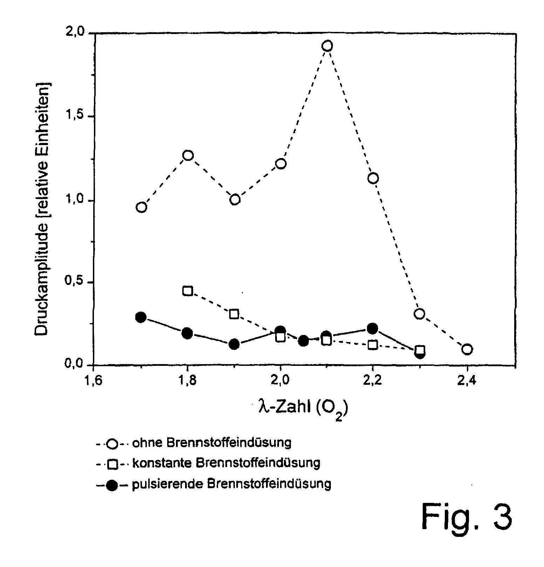

In Figur 3 wurde die relative Druckamplitude gegen die λ-Zahl für einen Brenner aufgetragen, der auf drei verschiedene Arten betrieben wurde, und zwar ohne zusätzliche Brennstoffeindüsung in die Kopfstufe, mit Eindüsung einer konstanten Menge Brennstoff von 4,4% des Gesamtbrennstoffmassenstroms bzw. mit einer modulierten Eindüsung von Brennstoff in die Kopfstufe. Die Modulation wurde dabei mit einer Frequenz von 12 Hz durchgeführt. Während eines Zeitraumes von 8,3 ms wurde ein Puls des Brennstoffs eingedüst, während der folgenden 75 ms erfolgte keine Brennstoffzugabe. Daraus ergibt sich eine durchschnittliche Brennstoffzugabe von 0,44% des Gesamtbrennstoffmassenstroms und ein duty cycle von 10%.

In Figur 3 ist deutlich zu erkennen, daß die Druckamplitude der thermoakustischen Schwingungen sowohl bei Eindüsung einer konstanten Menge an Brennstoff in die Kopfstufe als auch bei der gepulsten Eindüsung des Brennstoffs stark vermindert werden. Für beide verschiedenen Arten der Eindüsung ergeben sich ungefähr gleiche Werte der Druckamplituden.

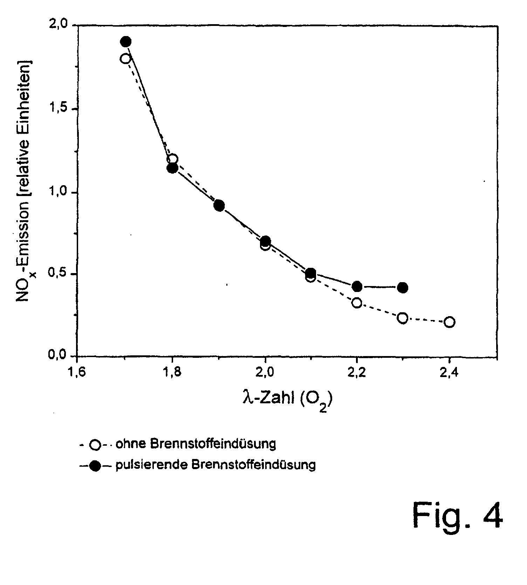

Figur 4 zeigt eine Auftragung der NOₓ-Emission gegen die λ-Zahl für einen Brenner ohne zusätzliche Brennstoffeindüsung in die Kopfstufe bzw. für einen Brenner mit modulierter Eindüsung von Brennstoff in die Kopfstufe. Die Modulation wurde dabei in der oben beschriebenen Art mit einer Frequenz von 12 Hz durchgeführt. Wiederum wurde während eines Zeitraumes von 8,3 ms ein Puls des Brennstoffs eingedüst, während in den folgenden 75 ms keine Brennstoffzugabe erfolgte. Die durchschnittliche Brennstoffzugabe beträgt somit 0,44% des Gesamtbrennstoff-massenstroms, und der duty cycle beträgt 10%.

Aus Figur 4 ist zu ersehen, daß die gepulste Eindüsung von Brennstoff in die Kopfstufe des Gasturbinen-brenners über einen weiten Bereich von 1,7 ≤ λ ≤ 2,1 zu keiner signifikanten Erhöhung der NOₓ-Emission führt. Die Abweichung der Werte für λ > 2,1 ist auf den für diese λ-Werte nicht optimal gewählten Brennstoffmassenstrom durch die Kopfstufe zurückzuführen.

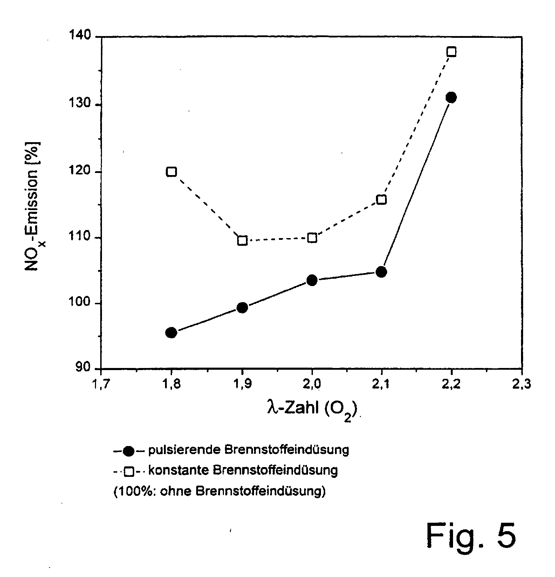

Zur Verdeutlichung des überraschenden Effekts der vorliegenden Erfindung wurde in Figur 5 die NOₓ-Emission gegen die λ-Zahl aufgetragen, wobei nur der für Gasturbinenbrenner relevante Bereich der λ-Zahl zwischen 1,8 und 2,2 berücksichtigt wurde. Die NOₓ-Emissionen wurden für einen Brenner mit Eindüsung eines konstanten Anteils von 4,4% des Gesamtbrennstoffmassenstroms in die Kopfstufe bzw. für einen Brenner mit modulierter Eindüsung von Brennstoff in die Kopfstufe aufgetragen. Die Modulation der Brennstoffeindüsung erfolgte dabei in der oben beschriebenen Weise. Die Werte der NOₓ-Emission wurden in der Auftragung gemäß Figur 5 auf die Emissionswerte ohne zusätzliche Brennstoffeindüsung, die gleich 100% gesetzt wurden, bezogen.

Aus Figur 5 ist deutlich zu entnehmen, daß eine pulsierende Brennstoffeindüsung im Vergleich zur Eindüsung einer konstanten Menge an Brennstoff zu einer Verringerung der NOₓ-Emission über einen Bereich von 1,8 ≤ λ ≤ 2,2, also über den gesamten für Gasturbinenbrenner relevanten Bereich, führt. Die Abnahme beträgt dabei bis zu 25%-Punkte (λ = 1,8) bezogen auf die NOₓ-Emission ohne Brennstoffeindüsung.

## Patentansprüche

1. Verfahren zur Minimierung der Druckamplitude thermoakustischer Schwingungen in einer Brennkammer einer Gasturbine, wobei die Brennkammer mit mindestens einem Vormischbrenner betrieben wird, welcher eine mit flüssigem oder gasförmigem Brennstoff betriebene Kopfstufe aufweist, und die Eindüsung des flüssigen oder gasförmigen Brennstoffs in die Kopfstufe des Vormischbrenners moduliert erfolgt, **dadurch gekennzeichnet, dass** eine vollständige Modulationsperiode aus der Eindüsung des Brennstoffs in Form eines zeitlich begrenzten Pulses und aus der nachfolgend fehlenden Zugabe von Brennstoff besteht, wobei die Bedingung *1%* ≤ t_{zugabe} / (t_{zugabe} + t₀) ≤ 50% erfüllt ist, wobei t_{zugabe} die Zeit definiert, in der eine Brennstoffeindüsung erfolgt, und t₀ jene Zeit definiert, in der keine Brennstoffeindüsung erfolgt.

2. Verfahren nach Anspruch 1, **dadurch gekennzeichnet, dass**
die Frequenz der Modulation zwischen 0,3 Hz und 5 kHz liegt.

3. Verfahren nach Anspruch 2, **dadurch gekennzeichnet, dass**
die Frequenz der Modulation zwischen 5 Hz und 20 Hz liegt.

## Claims

1. Method for minimizing the pressure amplitude of thermoacoustic oscillations in a combustion chamber of a gas turbine, the combustion chamber being operated with at least one premixing burner which has a head stage operated with liquid or gaseous fuel, and the injection of the liquid or gaseous fuel into the head stage of the premixing burner taking place in a modulated manner, **characterized in that** a complete modulation period consists of the injection of the fuel in the form of a time-limited pulse and of the subsequently absent addition of fuel, the condition 1% ≤ t_{addition}/(t_{addition} + t₀) ≤ 50% being fulfilled, t_{addition} defining the time in which fuel injection takes place, and to defining that time in which no fuel injection takes place.

2. Method according to Claim 1, **characterized in that** the modulation frequency is between 0.3 Hz and 5 KHz.

3. Method according to Claim 2, **characterized in that** the modulation frequency is between 5 Hz and 20 Hz.

## Revendications

1. Procédé pour minimiser l'amplitude de pression des vibrations thermoacoustiques dans une chambre de combustion d'une turbine à gaz, dans lequel la chambre de combustion est entraînée avec au moins un brûleur à prémélange, qui présente un étage de tête entraîné avec un combustible liquide ou gazeux, et où l'injection du combustible liquide ou gazeux s'effectue dans l'étage de tête du brûleur à prémélange, **caractérisé en ce qu'**une période de modulation complète se compose d'une l'injection du combustible sous forme d'une impulsion limitée dans le, temps et d'un ajout de combustible non existant ultérieur, la condition 1% ≤ tₐⱼₒᵤₜ / (tₐⱼₒᵤₜ + t₀) ≤ 50% étant satisfaite, tₐⱼₒᵤₜ définissant le temps durant lequel une injection de combustible a lieu et t₀ définissant le temps durant lequel aucune injection de combustible n'a lieu.

2. Procédé selon la revendication 1, **caractérisé en ce que**
la fréquence de la modulation est comprise entre 0,3 Hz et 5 kHz.

3. Procédé selon la revendication 2, **caractérisé en ce que**
la fréquence de la modulation est comprise entre 5 Hz et 20 Hz.
